# EUROPEAN PATENT SPECIFICATION

(11) **EP 3 012 283 B1**
(45) Date of publication and mention of the grant of the patent: **15.07.2020**
(21) Application number: 15190962.9
(22) Date of filing: 22.10.2015
(51) Int. Cl.: C08J 5/12, C09J 127/24

(54) **SOLVENT CEMENT FOR BONDING THERMOPLASTIC RESIN ARTICLES**
KLEBER FÜR DIE VERKLEBUNG VON THERMOPLASTISCHEN HARZ ARTIKELN
COLLE À SOLVANT POUR LIAISON THERMOPLASTIQUE ARTICLES EN RÉSINE

(30) Priority: 23.10.2014 US 201462067721 P; 23.09.2015 US 201514862751
(43) Date of publication of application: 27.04.2016
(73) Proprietor: IPS, Corporation - Weld-On Division, Compton, CA 90220 (US)
(72) Inventor: WU, Wei-Young, Diamond Bar, CA 91765 (US); SCHNEIDER, Andreas, Fullerton, CA 92833 (US)
(74) Representative: Hoefer & Partner Patentanwälte mbB

(56) References cited:
- WO-A1-2006/121476
- WO-A1-2013/122458
- US-A- 5 416 142
- US-A1- 2010 006 220

## Description

### Technical field

The present invention relates to a solvent cement for bonding articles made of a thermoplastic resin, a method of bonding articles made of a thermoplastic resin to one another and the use of a solvent cement for bonding articles made of a thermoplastic resin.

### Background of the Invention

Certain thermoplastic materials such as polyvinyl chloride (PVC) are widely used in the building industry because of their relative hardness and strength. In particular, PVC is used to make pipes, e.g. in industrial pressure systems, sewage or protecting electrical wiring, as well as for drinking water systems. Such pipes are often based on, or made from, specific types of PVC: PVC and CPVC.

PVC resins in which no plasticizers have been added are designated as a hard plastic. Such a PVC is able to resist temperatures up to about 60°C. CPVC designates a chlorinated PVC which is obtained by chlorination of PVC. CPVC has an increased hardness due to the chlorination as well as an increased temperature resistance (up to about 95 °C). CPVC can be used as construction material for cold and hot water pipes.

The difference between PVC and CPVC can be expressed in terms of the percentage by mass of chlorine (or chloride atoms), which is present in both types of PVC. Usually, PVC contains about 57 wt.% of chlorine, while the chlorine percentage of CPVC is typically above this value. The exact value for CPVC is dependent on the degree of chlorination which has been applied.

For bonding PVC pipes, a solvent cement containing PVC is often chosen, so that the resulting bond (or joint) exhibits the same properties as the pipe itself. Preferably, the bonding of a specific type of PVC pipe is carried out with a solvent cement which contains the same type of PVC. However, the use of a solvent cement containing the same type of thermoplastic resin is not a general necessity.

Solvent cement functions by welding thermoplastic sheets and piping by softening the surface of the material being bonded. Unlike gluing, which hardens to hold material together, the polymer chains of the softened material intermingle to form a solvent-welded joint that has the strength of the parent material. Proper preparation and primers allow the solvent to form a bond without contamination from grease, inks and oils.

A solvent cement for bonding articles made of a thermoplastic resin is usually a solution of polymers of the same or a different thermoplastic resin in a suitable solvent or solvent mix. Most commonly, the solvent mix used in a PVC-based solvent cement up to now contains tetrahydrofuran (THF) due to its ability of dissolving PVC. Other aggressive and harmful solvents which have been used in solvent cements for thermoplastic resins previously include N-Methyl-2-pyrrolidone (NMP), dimethyl sulfoxide (DMSO), dimethyl formamide (DMF), and/or others.

When bonding an article made of a thermoplastic resin such as PVC, the solvent cement is applied on the surfaces to be bonded. The solvent in the cement solvates the PVC molecules on the surface of the substrate. Depending on time and temperature, the adhesive dries at a different rate by diffusion of the solvent through the PVC, followed by evaporation of the solvent in air. After drying, a joint formed by the adhesive is obtained with smoothly bonded surfaces. In this context it can be referred to as a fusion, or solvent welding, of the two surfaces by means of an adhesive.

The use of potentially hazardous and volatile substances such as THF or others as mentioned above as solvents for such solvent cements has, however, major disadvantages, because of the health hazard concerns. For example, new European regulations came into force that classify THF as a suspected carcinogen (cf. 3^{rd} Adaptation to Technical Progress (ATP) to the EU Classification, Labeling and Packaging Regulation EC No. 1272/2008 (CLP)). At present, a new regulation is already in force in France which bans the use of solvent cements comprising harmful solvents for drinking water applications.

In view of the above drawbacks associated with the use of potentially hazardous substances as a solvent for adhesives, there is a general need for providing solvent cement devoid of solvents such as THF or others. To replace existing solvent cements, the new solvent cement should have good or at least similar adhesive properties to the existing solvent cements, with respect to workability and drying, as well as in terms of strength and temperature resistance of the obtained adhesive bond.

Therefore, it is one goal of the present invention, to provide solvent cement which does not comprise solvents such as THF but at the same time exhibits comparable or even improved properties than the well-known solvent cements which are not THF-free.

Further, it is a goal of the present invention to provide a method of bonding articles comprising the application of solvent cement which does not endanger the safety and health of the user but yields advantageous and excellent bonding properties.

### Summary of the Invention

These objects are solved by the aspects of the present invention as specified hereinafter.

A solvent cement for bonding articles made of a thermoplastic resin wherein the solvent cement comprises a) a dissolved thermoplastic resin, b) a solvent for the thermoplastic resin indicated under item a), and c) an at least partially imidized acrylic polymer, wherein the solvent cement does not comprise tetrahydrofuran or N-Methyl-2 Pyrrolidone (NMP) and wherein the solvent cement does not comprise an aliphatic compound having a hydrocarbon ring with at least two ether groups in the ring structure, and wherein the dissolved thermoplastic resin indicated under item a) is PVC or CPVC, and wherein the at least partially imidized acrylic polymer indicated under item c) constitutes less than 75 wt. % of the total amount of dissolved thermoplastic resin of item a) and c) together.

The article to be bonded comprises PVC or CPVC, in particular the article to be bonded is made of PVC or CPVC.

The dissolved thermoplastic resin in the solvent cement corresponds to the thermoplastic resin in the article to be bonded.

The dissolved thermoplastic resin in the solvent cement is different from the thermoplastic resin in the article to be bonded.

The dissolved thermoplastic resin has a K value of at most 57, in particular at most 55, especially at most 52.

The dissolved thermoplastic resin has a chlorine content of at least 62 wt. %, in particular at least 65 wt. %, especially at least 67 wt. %.

The dissolved thermoplastic resin is present in the solvent cement in a range of from 5 to 30 wt. % in relation to the total weight of the solvent cement, in particular the dissolved thermoplastic resin is present in the solvent cement in a range of from 10 to 25 wt. % in relation to the total weight of the solvent cement.

The solvent for the dissolved thermoplastic resin is methyl ethyl ketone (MEK) or methyl isoamyl ketone (MIAK), in particular the solvent for the dissolved thermoplastic resin is methyl ethyl ketone (MEK).

The solvent for the dissolved thermoplastic resin is present in the solvent cement in a range of from 60 to 90 wt. % in relation to the total weight of the solvent cement, in particular the solvent for the dissolved thermoplastic resin is present in the solvent cement in a range of from 70 to 90 wt. % in relation to the total weight of the solvent cement.

The at least partially imidized acrylic polymer is an at least partially imidized poly(methyl methacrylate) (PMMI).

The at least partially imidized poly(methyl methacrylate) comprises a poly(N-methyl methacrylimide).

The at least partially imidized acrylic polymer is present in the solvent cement in a range of from 1 to 10 wt. % in relation to the total weight of the solvent cement, in particular the at least partially imidized acrylic polymer is present in the solvent cement in a range of from 2 to 7 wt. % in relation to the total weight of the solvent cement.

The solvent cement further comprises a toughening resin, in particular the solvent cement further comprises acrylonitrile butadiene styrene (ABS) or methyl methacrylate butadiene styrene (MBS) as toughening resin, especially the solvent cement further comprises acrylonitrile butadiene styrene (ABS) as toughening resin.

The toughening resin is of a core-shell type, in particular the toughening resin comprises a crosslinked poly(butyl acrylate) core with a grafted poly(methyl methacrylate) shell.

The toughening resin is present in the solvent cement in a range of from 0 to 10 wt. % in relation to the total weight of the solvent cement, in particular the toughening resin is present in the solvent cement in a range of from 0 to 5 wt. % in relation to the total weight of the solvent cement.

The solvent cement further comprises a thickener and/or a viscosity enhancer and/or a stabilizer.

The solvent cement does not comprise cyclohexanone and/or the solvent cement does not comprise dimethyl sulfoxide (DMSO) and/or the solvent cement does not comprise dimethyl formamide (DMF).

The acrylic polymer constitutes less than 50 wt. % of the total amount of the dissolved thermoplastic resin and the acrylic polymer together, in particular less than 25 wt. % of the total amount of the dissolved thermoplastic resin and the acrylic polymer together.

The solvent cement meets the requirements of the European standard EN 14814.

A method of bonding articles made of a thermoplastic resin to one another wherein the method comprises the steps of: i) applying a solvent cement to the surfaces of the articles to be bonded, wherein the solvent cement comprises a) a dissolved thermoplastic resin, b) a solvent for the thermoplastic resin indicated under item a), and c) an at least partially imidized acrylic polymer (PMMI), and wherein the solvent cement does not comprise tetrahydrofuran or N-Methyl-2-Pyrrolidone (NMP) and wherein the solvent cement does not comprise an aliphatic compound having a hydrocarbon ring with at least two ether groups in the ring structure, and wherein the dissolved thermoplastic resin indicated under item a) is PVC or CPVC, and wherein the at least partially imidized acrylic polymer indicated under item c) constitutes less than 75 wt. % of the total amount of dissolved thermoplastic resin of item a) and c) together bringing the surfaces into contact with one another, and allowing the solvent cement to form a bond between the articles to be bonded.

The articles to be bonded are pipes and/or pipe fittings.

Use of a solvent cement for bonding articles made of a thermoplastic resin to one another wherein the solvent cement comprises a) a dissolved thermoplastic resin, b) a solvent for the thermoplastic resin indicated under item a), and c) an at least partially imidized acrylic polymer (PMMI), and wherein the solvent cement does not comprise tetrahydrofuran or N-Methyl-2 Pyrrolidone (NMP) and wherein the solvent cement does not comprise an aliphatic compound having a hydrocarbon ring with at least two ether groups in the ring structure, and wherein the dissolved thermoplastic resin indicated under item a) is PVC or CPVC, and wherein the at least partially imidized acrylic polymer indicated under item c) constitutes less than 75 wt. % of the total amount of dissolved thermoplastic resin of item a) and c) together.

The articles to be bonded are pipes and/or pipe fittings.

### Detailed Description of the Invention

It has been surprisingly found that it is possible to provide a solvent cement for bonding thermoplastic resins which does not use any aggressive or harmful solvents such as THF by including a partially imidized poly(methyl methacrylate) (PMMI) into the solvent cement formulation. Thus, the present invention provides solvent cement which does not contain the harmful solvents which were previously comprised in the standard solvent cements but achieves a very high pressure resistance which allows to pass the requirements of the specifications set in EN 14814. Meeting these specifications is crucial for any product which should be used in the construction industry.

The present invention offers solvent cement for bonding articles made of a thermoplastic resin. Within the meaning of the present invention, the solvent cement acts as an adhesive between the articles to be bonded. In the context of the present invention the term adhesive or solvent cement is to be understood as a material, in liquid or substantially liquid form (i.e. which presents a certain viscosity or may be thixotropic), that adheres or bonds items together. The solvent cement or adhesive cures (hardens) and the bond (joint) between two or more items is formed.

According to one embodiment, the articles to be bonded which are made of a thermoplastic resin are pipes, pipe fittings or other molded articles, in particular pipes or pipe fittings. The difference between PVC and CPVC can be expressed in terms of the percentage by mass of chlorine (or chloride atoms), which is present in both types of PVC. Usually, PVC contains about 57 wt.% of chlorine, and therefore, the chlorine percentage of the CPVC is above this value. The exact value for CPVC is dependent on the degree of chlorination which has been applied.

According to one embodiment of the present invention, a CPVC resin is used which has a chlorine content of at least 62 wt.%, in particular at least 65 wt.%, especially at least 67 wt.%. According to another embodiment, a CPVC resin is used which has a chlorine content of 67 wt.%.

According to another embodiment of the present invention, a thermoplastic resin is used which has a K value of at most 57, in particular at most 55, especially at most 52. The K value is well known in the art and may be determined by the skilled person based on his general knowledge. One generally known standard for the determination of the K value of a resin is according to DIN EN ISO 1628-1.

According to one particular embodiment, a thermoplastic resin is used which has a K value of 52 and a chlorine content of 67%.

The solvent cement of the present invention may be used for bonding unchlorinated PVC (PVC) as well as for chlorinated PVC (CPVC). According to one embodiment, the articles to be bonded comprise PVC, in particular the articles are made of PVC. According to another embodiment, the articles to be bonded comprise CPVC, in particular the articles are made of CPVC.

According to the present invention, the solvent cement comprises a) a dissolved thermoplastic resin. In one embodiment of the present invention, the dissolved thermoplastic resin which is comprised in the solvent cement should at least partly be dissolved in the liquid solvent cement.

According to one embodiment of the present invention, the dissolved thermoplastic resin comprises PVC, in particular the dissolved thermoplastic resin is PVC. According to another embodiment, the dissolved thermoplastic resin comprises CPVC, in particular the dissolved thermoplastic resin is CPVC.

In another embodiment of the present invention, the dissolved thermoplastic resin is present in the solvent cement in an amount of at least 1 wt.% in relation to the total weight of the solvent cement, in particular of at least 5 wt.%, more in particular of at least 10 wt.%, especially of at least 12 wt.%.

In yet another embodiment of the present invention, the dissolved thermoplastic resin is present in the thermoplastic resin in an amount of at most 50 wt.% in relation to the total weight of the solvent cement, in particular of at most 30 wt.%, more in particular of at most 25 wt.%, even more in particular of at most 20 wt.%, especially of at least 15 wt.%.

According to the present invention, the solvent cement further comprises b) a solvent for the dissolved thermoplastic resin described above.

The solvent used in the solvent cement for dissolving the thermoplastic resin includes any solvent which can dissolve the thermoplastic resin to form a solution and is not toxic or hazardous to humans. A suitable solvent according to one embodiment of the present invention is able to dissolve 5 g of the selected thermoplastic resin in 100 ml of the selected solvent, in particular when the solvent is able to dissolve 10 g of the selected thermoplastic resin in 100 ml of the selected solvent, especially when the solvent is able to dissolve 20 g of the selected thermoplastic resin in 100 ml of the selected solvent.

In order to determine the solubility of a thermoplastic resin in a solvent, any method as known in the art may be employed. An example of such a method is performed as follows: a known amount of the pure solvent - for example, 100ml - is put in a container. Then the thermoplastic resin of which the solubility is to be determined is added and the mixture is stirred vigorously for a defined amount of time (i.e. with a high shear mixer at 2000 rpm for 30 minutes at 40°C). After stirring, the mixture is examined if solvent and thermoplastic resin form separate phases or if the thermoplastic resin forms a sediment after letting the mixture settle e.g. for 30 minutes at 40°C.

Suitable solvents according to one embodiment include non-cyclic ketones, in particular methyl ethyl ketone (MEK) or methyl isoamyl ketone (MIAK), especially methyl ethyl ketone. These solvents may be used alone, but also two or more solvents may be considered as a solvent for the dissolved thermoplastic resin according to one embodiment. According to one embodiment, the solvent for the dissolved thermoplastic resin is a combination of methyl ethyl ketone (MEK) and methyl isoamyl ketone (MIAK). Suitable solvents may be different depending on the thermoplastic resin employed. Appropriate solvents may be chosen for the respective thermoplastic resin used, as will be apparent to persons skilled in the art. According to one embodiment of the present invention, the solvent for the dissolved thermoplastic resin is cyclohexanone and/or acetone, in particular the solvent is cyclohexanone. According to another embodiment of the present invention, the solvent for the dissolved thermoplastic resin is a combination of cyclohexanone and/or acetone. According to one embodiment of the present invention, the solvent for the dissolved thermoplastic resin is present in the solvent cement in an amount of at least 50 wt.% in relation to the total weight of the solvent cement, in particular of at least 60 wt.%, more in particular of at least 70 wt.%, especially of at least 75 wt.%.

According to another embodiment of the present invention, the solvent for the dissolved thermoplastic resin is present in the solvent cement in an amount of at most 90 wt.% in relation to the total weight of the solvent cement, in particular of at most 85 wt.%, more in particular of at most 80 wt.%, especially of at most 78 wt.%.

According to the present invention, the solvent cement further comprises c) an at least partially imidized acrylic polymer. Such partially imidized acrylic polymers and copolymers are available commercially and may be prepared by a variety of procedures. Imidized acrylic polymers may be prepared by reacting an acrylic polymer or acrylic copolymer with ammonia or a primary aliphatic or aromatic monoamine. The imide group is formed by the reaction of the monoamine with two or more of the following groups which may be present in the acrylic polymer: carboxylic acid group, carboxylic ester group, carboxamide (e.g., from methacrylamide).

Such imidized acrylic polymers and their preparation have been disclosed in various patents and publications, and such polymers have been referred to as glutarimide acrylic copolymers or polyglutarimides in view of the formation of glutarimide groups when the ammonia or primary amine reacts with the acrylate copolymer. Examples for such at least partially imidized acrylic polymers and details on methods for their production are described in U.S. Pat. Appl. No. 2006/0252865 A1.

According to one embodiment of the present invention, the at least partially imidized acrylic polymer is an at least partially imidized poly(methyl methacrylate) (PMMI). According to another embodiment, the at least partially imidized acrylic polymer comprises a poly(N-methyl methacrylimide).

According to one particular embodiment of the present invention, a commercially available product marketed under the name PLEXIMID® TT70 or ACRYMID® TT70 by Evonik Industries is used as the at least partially imidized acrylic polymer.

According to another embodiment of the present invention, the at least partially imidized acrylic polymer is present in the solvent cement in an amount of at least 0.5 wt.% in relation to the total weight of the solvent cement, in particular of at least 1 wt.%, more in particular of at least 2 wt.%, especially of at least 3 wt.%.

According to another embodiment of the present invention, the at least partially imidized acrylic polymer is present in the solvent cement in an amount of at most 15 wt.% in relation to the total weight of the solvent cement, in particular of at most 10 wt.%, more in particular of at most 7 wt.%, especially of at most 5 wt.%.

According to one embodiment of the present invention, the solvent cement further comprises a toughening resin. According to one particular embodiment, the solvent cement further comprises acrylonitrile butadiene styrene (ABS) or methyl methacrylate butadiene styrene (MBS) as toughening resin, in particular the solvent cement further comprises acrylonitrile butadiene styrene (ABS) as toughening resin.

According to an alternative embodiment, the solvent cement further comprises a toughening resin which is of a core-shell type, in particular the solvent cement further comprises a toughening resin which comprises a crosslinked poly(butyl acrylate) core with a grafted poly(methyl methacrylate) shell. According to a particular embodiment, the solvent cement further comprises a toughening resin which is marketed under the name Paraloid EXL™ 2330 by The Dow Chemical Company.

According to another embodiment, the toughening resin is present in the solvent in an amount of at least 0.5 wt.% in relation to the total weight of the solvent cement, in particular of at least 1 wt.%, more in particular of at least 2 wt.%, especially of at least 2.5 wt.%.

According to another embodiment, the toughening resin is present in the solvent in an amount of at most 15 wt.% in relation to the total weight of the solvent cement, in particular of at most 10 wt.%, more in particular of at most 5 wt.%, especially of at most 3 wt.%. According to one embodiment of the present invention, the solvent cement further comprises a thickener, in particular a hydrophilic fumed silica, especially a product marketed under the name AEROSIL® 200 by Evonik Industries.

According to another embodiment of the present invention, the solvent cement further comprises a viscosity enhancer, in particular a viscosity enhancer comprising polyhydroxy carboxylic acid amides, especially a product marketed under the name BYK R605 by Altana AG. Another suitable viscosity enhancer is N, N, N', N'-Tetrakis (2-hydroxypropyl)ethylenediamine, in particular a product which is marketed under the name Quadrol® Specialty Polyol by BASF.

According to another embodiment of the present invention, the solvent cement further comprises a stabilizer. According to yet another embodiment, the solvent cement further comprises a tin stabilizer for a CPVC resin, in particular one of methyltin, octyltin, mixed metal alkyltins, dialkyl tin di-carboxylates, methyltin mercaptides, butyltin mercaptides, dialkyl tin bis(alkylmercaptocarboxylate) including di-n-octyltin-S,S'-bis(isooctyl mercaptoacetate), butylthiostannoic acid, and other ester tins, especially a product marketed under the name Mark 292 by Galata Chemicals.

According to one embodiment of the present invention, the solvent cement does not comprise N-Methyl-2-Pyrrolidone (NMP). According to another embodiment, the solvent cement does not comprise cyclohexanone. According to another embodiment, the solvent cement does not comprise dimethyl sulfoxide (DMSO). According to yet another embodiment, the solvent cement does not comprise dimethyl formamide (DMF). According to one particular embodiment, the solvent cement comprises cyclohexanone but does not comprise N-Methyl-2-Pyrrolidone (NMP), dimethyl sulfoxide (DMSO), dimethyl formamide (DMF).

According to another embodiment of the present invention, the at least partially imidized acrylic polymer indicated described above constitutes less than 80 wt. % of the total amount of the dissolved thermoplastic resin and the acrylic polymer together, in particular less than 70 wt. % of the dissolved thermoplastic resin and the acrylic polymer together, more in particular less than 50 wt. % of the dissolved thermoplastic resin and the acrylic polymer together, especially less than 25 wt. % of the dissolved thermoplastic resin and the acrylic polymer together.

According to one embodiment, the solvent cement meets the requirements of the European standard EN 14814.

According to the present invention, a method is provided of bonding articles made of a thermoplastic resin to one another. According to one embodiment, the articles to be bonded are pipes and/or pipe fittings. According to another embodiment of the method of the present invention, the step of allowing the solvent cement to form a bond between the articles to be bonded is performed for at least five days, in particular for at least ten days, especially for at least 20 days. According to another embodiment of the method of the present invention, the step of allowing the solvent cement to form a bond between the articles to be bonded is performed at a temperature of at least 15°C, in particular of at least 20°C, especially at 23°C, alternatively at ambient temperature.

Further according to the present invention, the use of a solvent cement is provided for bonding articles made of a thermoplastic resin to one another. According to a preferred embodiment of the present invention, the solvent cement is used for bonding pipes and/or pipe fittings.

### Examples

The materials used in the experimental section are listed in the table below.

The following analysis methods were used:
Viscosity was measured with a Brookfield Viscometer using No. 4 spindle and a speed of 12 rpm.

Joints for pressure testing were prepared and conditioned as described in EN 14814. The pipes and couplings used were 40 mm and 110 mm PVC-U pipe with a rating of PN16. According to EN14814 the required test pressure is 16 Bar and the test temperature is 60°C. The test joints must withstand 1000 hours at temperature and pressure in order to pass the test.

The pressure test of EN 14814 is more difficult to pass when larger diameter pipes are used to prepare the joints, passing EN 14814 using a larger diameter pipe size therefore indicates higher performing cement.

Preparation of solvent cements according to the invention:
Dissolve the PVC resin or CPVC resin prior to the addition of PMMI and ABS/Impact Modifier in solvent using a high shear mixer. After all the resins are dissolved, the thickening agent is added to the mixture.

The viscosity is measured shortly after mixing is completed.

Examples 1 and 2 in Table 1 include the composition and the results of formulations prepared with PVC resin, PMMA/PMMI resin, ABS resin and Thickening Agents, dissolved in MEK. As a comparative Example, Weld-On 719 Clear Low VOC PVC Plastic Pipe Cement marketed by Weld-On Adhesives is used. This solvent cement comprises 45 - 60 wt.% of THF and 9 - 18 wt.% of cyclohexanone as solvents. Example 1 shows that a cement with a standard acrylic resin that does not contain imide groups fails in the pressure test.

**Table 1:**

| Component | Weld-On 719 Commercial Product using THF and Cyclohexanone | Ex. 1 | Ex. 2 |
|---|---|---|---|
| Axiall PVC 1055 | | 13.5 | 13.2 |
| Plaskolite PMMA CA-86 | | 4.4 | - |
| Evonik PMMI TT-70 | | - | 4.3 |
| Grand Pacific ABS HRG P60R | | 2.9 | 2.8 |
| MEK (2-Butanone) Sigma-Aldrich Inc purity ≥ 99.0 % | | 77.3 | 77.5 |
| MIAK (5-Methyl-2-hexanone) Sigma-Aldrich Inc purity ≥ 99.0 % | | - | - |
| Silica Aerosil 200 | | 1.9 | 2.1 |
| Viscosity Enhancer Quadrol | | 0.02 | 0.02 |
| Solid Content (%) | 19.3 | 22.7 | 22.5 |
| Viscosity (cp) | 20,000 | 11,700 | 13,000 |
| *EN 14814 Pressure Test (40mm)* | *Pass* | *Fail* | *Pass* |

Examples 3 and 4 in Table 2 include the composition and the results of formulations prepared with CPVC resin, PMMI resin, ABS resin or Core-Shell Toughening Resin and Thickening Agents, in MEK and MIAK.

| Component | Ex. 3 | Ex. 4 | Ex. 5 | Ex. 6 |
|---|---|---|---|---|
| Galata Mark 292 Tin Stabilizer | 0.15 | 0.15 | 0.15 | 0.15 |
| Sekisui CPVC HA-05K | 12.5 | 12.6 | 12.7 | 8.82 |
| Lubrizol CPVC 674x571 | - | - | - | 5.86 |
| Evonik PMMI TT-70 | 3.9 | 3.9 | 3.9 | 4.52 |
| Grand Pacific ABS HRG P60R | 2.9 | - | - | - |
| Paraloid EXL™ 2330 | - | 2.9 | 2.9 | 3.4 |
| Acetone Sigma-Aldrich Inc purity ≥ 99.0 % | - | - | 10.1 | - |
| Cyclohexanone Sigma-Aldrich Inc purity ≥ 99.0 % | - | - | 10.1 | 25 |
| MEK (2-Butanone) Sigma-Aldrich Inc purity ≥ 99.0 % | 68.35 | 69.85 | 59.65 | 52.25 |
| MIAK (5-Methyl-2-hexanone) Sigma-Aldrich Inc purity ≥ 99.0 % | 10 | 8.6 | - | - |
| Silica Aerosil 200 | 2.0 | 2.0 | 0.5 | - |
| Viscosity Enhancer BYK R605 | 0.2 | - | - | - |
| Solid Content (%) | 21.6 | 21.1 | 20.15 | 22.8 |
| Viscosity (cp) | 15,000 | 15,000 | 4,600 | 3800 |
| *EN 14814 Pressure Test (110mm)* | *Pass* | *Pass* | *Pass* | *Pass* |

Example 3, Example 4, Example 5 and Example 6 provide comparable pressure test performance to the Weld-On-719. Examples 3 and 4 only use the solvents MEK and MIAK whereas Weld-On 719 uses THF.

## Claims

1. A solvent cement for bonding articles made of a thermoplastic resin wherein the solvent cement comprises
a) a dissolved thermoplastic resin,
b) a solvent for the thermoplastic resin indicated under item a), and
c) an at least partially imidized acrylic polymer,
wherein the solvent cement does not comprise tetrahydrofuran or N-Methyl-2-Pyrrolidone (NMP) and wherein the solvent cement does not comprise an aliphatic compound having a hydrocarbon ring with at least two ether groups in the ring structure,
and wherein the dissolved thermoplastic resin indicated under item a) is PVC or CPVC,
and wherein the at least partially imidized acrylic polymer indicated under item c) constitutes less than 75 wt. % of the total amount of dissolved thermoplastic resin of item a) and c) together.

2. The solvent cement according to claim 1, wherein the article to be bonded comprises PVC or CPVC, preferably the article to be bonded is made of PVC or CPVC.

3. The solvent cement according to any of claims 1 or 2, wherein the dissolved thermoplastic resin has a K value of at most 57, preferably at most 55, more preferably at most 52,
wherein the K value is determined according to DIN EN ISO 1628-1.

4. The solvent cement according to any of claims 1 to 3, wherein the dissolved thermoplastic resin has a chlorine content of at least 62 wt. %, preferably at least 65 wt. %, more preferably at least 67 wt. %.

5. The solvent cement according to any of claims 1 to 4, wherein the solvent indicated under item b) is a non-cycle ketone such as methyl ethyl ketone (MEK) or methyl isoamyl ketone (MIAK), or a mixture of both, and preferably the solvent indicated under item b) is methyl ethyl ketone (MEK).

6. The solvent cement according to any of claims 1 to 5, wherein the at least partially imidized acrylic polymer is an at least partially imidized poly(methyl methacrylate) (PMMI), preferably wherein the at least partially imidized poly(methyl methacrylate) comprises a poly(N-methyl methacrylimide).

7. The solvent cement according to any of claims 1 to 6, wherein the solvent cement further comprises a toughening resin, preferably the solvent cement further comprises acrylonitrile butadiene styrene (ABS) or methyl methacrylate butadiene styrene (MBS) as toughening resin, more preferably the solvent cement further comprises acrylonitrile butadiene styrene (ABS) as toughening resin.

8. The solvent cement according to claim 7, wherein the toughening resin is of a core-shell type, preferably the toughening resin comprises a crosslinked poly(butyl acrylate) core with a grafted poly(methyl methacrylate) shell.

9. The solvent cement according to any of claims 1 to 8, wherein the solvent cement further comprises a thickener and/or a viscosity enhancer and/or a stabilizer.

10. The solvent cement according to any of claims 1 to 9, wherein the solvent cement does not comprise cyclohexanone and/or wherein the solvent cement does not comprise dimethyl sulfoxide (DMSO) and/or wherein the solvent cement does not comprise dimethyl formamide (DMF).

11. The solvent cement according to any of claims 1 to 10, wherein the at least partially imidized acrylic polymer indicated under item c) constitutes less than 50 wt. % of the total amount of dissolved thermoplastic resin of item a) and c) together, preferably less than 25 wt. % of the total dissolved thermoplastic resin.

12. The solvent cement according to any of claims 1 to 11, wherein the solvent cement meets the requirements of the European standard EN 14814.

13. A method of bonding articles made of a thermoplastic resin to one another wherein the method comprises the steps of:
i) applying a solvent cement to the surfaces of the articles to be bonded, wherein the solvent cement comprises
a) a dissolved thermoplastic resin,
b) a solvent for the thermoplastic resin indicated under item a), and
c) an at least partially imidized acrylic polymer (PMMI),
and wherein the solvent cement does not comprise tetrahydrofuran or N-Methyl-2-Pyrrolidone (NMP) and wherein the solvent cement does not comprise an aliphatic compound having a hydrocarbon ring with at least two ether groups in the ring structure,
and wherein the dissolved thermoplastic resin indicated under item a) is PVC or CPVC,
and wherein the at least partially imidized acrylic polymer indicated under item c) constitutes less than 75 wt. % of the total amount of dissolved thermoplastic resin of item a) and c) together
ii) bringing the surfaces into contact with one another, and
iii) allowing the solvent cement to form a bond between the articles to be bonded.

14. Use of a solvent cement for bonding articles made of a thermoplastic resin to one another wherein the solvent cement comprises
a) a dissolved thermoplastic resin,
b) a solvent for the thermoplastic resin indicated under item a), and
c) an at least partially imidized acrylic polymer (PMMI),
and wherein the solvent cement does not comprise tetrahydrofuran or N-Methyl-2-Pyrrolidone (NMP) and wherein the solvent cement does not comprise an aliphatic compound having a hydrocarbon ring with at least two ether groups in the ring structure,
and wherein the dissolved thermoplastic resin indicated under item a) is PVC or CPVC,
and wherein the at least partially imidized acrylic polymer indicated under item c) constitutes less than 75 wt. % of the total amount of dissolved thermoplastic resin of item a) and c) together.

## Patentansprüche

1. Kleber für das Verkleben von aus einem thermoplastischen Harz hergestellten Artikeln, wobei der Kleber umfasst
a) ein gelöstes thermoplastisches Harz,
b) ein Lösungsmittel für das unter Punkt a) angegebene thermoplastische Harz, und
c) ein mindestens teilweise imidiertes Acrylpolymer,
wobei der Kleber kein Tetrahydrofuran oder N-Methyl-2-pyrrolidon (NMP) umfasst und wobei der Kleber keine aliphatische Verbindung mit einem Kohlenwasserstoffring mit mindestens zwei Ethergruppen in der Ringstruktur umfasst,
und wobei das unter Punkt a) angegebene gelöste thermoplastische Harz PVC oder CPVC ist,
und wobei das unter Punkt c) angegebene mindestens teilweise imidierte Acrylpolymer weniger als 75 Gew.-% der Gesamtmenge an gelöstem thermoplastischem Harz von Punkt a) und c) zusammen ausmacht.

2. Kleber gemäß Anspruch 1, wobei der zu verklebende Artikel PVC oder CPVC umfasst, wobei bevorzugt der zu verklebende Artikel aus PVC oder CPVC hergestellt ist.

3. Kleber gemäß einem der Ansprüche 1 oder 2, wobei das gelöste thermoplastische Harz einen K-Wert von höchstens 57, bevorzugt höchstens 55, stärker bevorzugt höchstens 52 aufweist,
wobei der K-Wert gemäß DIN EN ISO 1628-1 bestimmt wird.

4. Kleber gemäß einem der Ansprüche 1 bis 3, wobei das gelöste thermoplastische Harz einen Chlorgehalt von mindestens 62 Gew.-%, bevorzugt mindestens 65 Gew.-%, stärker bevorzugt mindestens 67 Gew.-% aufweist.

5. Kleber gemäß einem der Ansprüche 1 bis 4, wobei das unter Punkt b) angegebene Lösungsmittel ein nicht-cyclisches Keton wie Methylethylketon (MEK) oder Methylisoamylketon (MIAK) oder ein Gemisch von beiden ist, und wobei bevorzugt das unter Punkt b) angegebene Lösungsmittel Methylethylketon (MEK) ist.

6. Kleber gemäß einem der Ansprüche 1 bis 5, wobei das mindestens teilweise imidierte Acrylpolymer ein mindestens teilweise imidiertes Poly(methylmethacrylat) (PMMI) ist, wobei bevorzugt das mindestens teilweise imidierte Poly(methylmethacrylat) ein Poly(N-methylmethacrylimid) umfasst.

7. Kleber gemäß einem der Ansprüche 1 bis 6, wobei der Kleber ferner ein zähmachendes Harz umfasst, wobei bevorzugt der Kleber ferner Acrylnitril-Butadien-Styrol (ABS) oder Methylmethacrylat-Butadien-Styrol (MBS) als zähmachendes Harz umfasst, wobei stärker bevorzugt der Kleber ferner Acrylnitril-Butadien-Styrol (ABS) als zähmachendes Harz umfasst.

8. Kleber gemäß Anspruch 7, wobei das zähmachende Harz von einem Typ Kern/Schale ist, wobei bevorzugt das zähmachende Harz einen vernetzten Poly(butylacrylat)-Kern mit einer gepfropften Poly(methylmethacrylat)-Schale umfasst.

9. Kleber gemäß einem der Ansprüche 1 bis 8, wobei der Kleber ferner ein Verdickungsmittel und/oder ein Mittel zur Erhöhung der Viskosität und/oder einen Stabilisator umfasst.

10. Kleber gemäß einem der Ansprüche 1 bis 9, wobei der Kleber kein Cyclohexanon umfasst und/oder wobei der Kleber kein Dimethylsulfoxid (DMSO) umfasst und/oder wobei der Kleber kein Dimethylformamid (DMF) umfasst.

11. Kleber gemäß einem der Ansprüche 1 bis 10, wobei das unter Punkt c) angegebene mindestens teilweise imidierte Acrylpolymer weniger als 50 Gew.-% der Gesamtmenge an gelöstem thermoplastischem Harz von Punkt a) und c) zusammen, bevorzugt weniger als 25 Gew.-% des gesamten gelösten thermoplastischen Harzes ausmacht.

12. Kleber gemäß einem der Ansprüche 1 bis 11, wobei der Kleber die Anforderungen der Europäischen Norm EN 14814 erfüllt.

13. Verfahren von Aneinanderkleben von aus einem thermoplastischen Harz hergestellten Artikeln, wobei das Verfahren die folgenden Schritte umfasst:
i) Aufbringen eines Klebers auf die zu verklebenden Oberflächen der Artikel, wobei der Kleber umfasst
a) ein gelöstes thermoplastisches Harz,
b) ein Lösungsmittel für das unter Punkt a) angegebene thermoplastische Harz, und
c) ein mindestens teilweise imidiertes Acrylpolymer (PMMI),
und wobei der Kleber kein Tetrahydrofuran oder N-Methyl-2-pyrrolidon (NMP) umfasst und wobei der Kleber keine aliphatische Verbindung mit einem Kohlenwasserstoffring mit mindestens zwei Ethergruppen in der Ringstruktur umfasst,
und wobei das unter Punkt a) angegebene gelöste thermoplastische Harz PVC oder CPVC ist,
und wobei das unter Punkt c) angegebene mindestens teilweise imidierte Acrylpolymer weniger als 75 Gew.-% der Gesamtmenge an gelöstem thermoplastischem Harz von Punkt a) und c) zusammen ausmacht,
ii) miteinander Inkontaktbringen der Oberflächen, und
iii) Ermöglichen, dass der Kleber eine Klebeverbindung zwischen den zu verklebenden Artikeln ausbildet.

14. Verwendung eines Klebers zum Aneinanderkleben von aus einem thermoplastischen Harz hergestellten Artikeln, wobei der Kleber umfasst
a) ein gelöstes thermoplastisches Harz,
b) ein Lösungsmittel für das unter Punkt a) angegebene thermoplastische Harz, und
c) ein mindestens teilweise imidiertes Acrylpolymer (PMMI),
und wobei der Kleber kein Tetrahydrofuran oder N-Methyl-2-pyrrolidon (NMP) umfasst und wobei der Kleber keine aliphatische Verbindung mit einem Kohlenwasserstoffring mit mindestens zwei Ethergruppen in der Ringstruktur umfasst, und wobei das unter Punkt a) angegebene gelöste thermoplastische Harz PVC oder CPVC ist,
und wobei das unter Punkt c) angegebene mindestens teilweise imidierte Acrylpolymer weniger als 75 Gew.-% der Gesamtmenge an gelöstem thermoplastischem Harz von Punkt a) und c) zusammen ausmacht.

## Revendications

1. Ciment à solvant pour lier des articles réalisés en une résine thermoplastique, dans lequel le ciment à solvant comprend
a) une résine thermoplastique dissoute,
b) un solvant pour la résine thermoplastique indiquée au point a), et
c) un polymère acrylique au moins partiellement imidisé,
dans lequel le ciment à solvant ne comprend pas de tétrahydrofurane ou de N-Méthyl-2-Pyrrolidone (NMP) et dans lequel le ciment à solvant ne comprend pas de composé aliphatique ayant un cycle hydrocarboné avec au moins deux groupes éther dans la structure cyclique,
et dans lequel la résine thermoplastique dissoute indiquée au point a) est du PVC ou du CPVC,
et dans lequel le polymère acrylique au moins partiellement imidisé indiqué au point c) constitue moins de 75% en poids de la quantité totale de résine thermoplastique dissoute des points a) et c) ensemble.

2. Ciment à solvant selon la revendication 1, dans lequel l'article à lier comprend du PVC ou du CPVC, de préférence l'article à lier est réalisé en PVC ou en CPVC.

3. Ciment à solvant selon l'une des revendications 1 et 2, dans lequel la résine thermoplastique dissoute a une valeur K d'au plus 57, de préférence d'au plus 55, plus préférablement d'au plus 52,
dans lequel la valeur K est déterminée selon la norme DIN EN ISO 1628-1.

4. Ciment à solvant selon l'une des revendications 1 à 3, dans lequel la résine thermoplastique dissoute a une teneur en chlore d'au moins 62% en poids, de préférence d'au moins 65% en poids, plus préférablement d'au moins 67% en poids.

5. Ciment à solvant selon l'une des revendications 1 à 4, dans lequel le solvant indiqué au point b) est une cétone non cyclique telle que la méthyléthylcétone (MEK) ou la méthylisoamylcétone (MIAK), ou un mélange des deux, et de préférence le solvant indiqué au point b) est la méthyléthylcétone (MEK).

6. Ciment à solvant selon l'une des revendications 1 à 5, dans lequel le polymère acrylique au moins partiellement imidisé est un poly(méthacrylate de méthyle) au moins partiellement imidisé (PMMI), de préférence dans lequel le poly(méthacrylate de méthyle) au moins partiellement imidisé comprend un poly(N-méthyl méthacrylimide).

7. Ciment à solvant selon l'une des revendications 1 à 6, dans lequel le ciment à solvant comprend en outre une résine de renforcement, de préférence le ciment à solvant comprend en outre de l'acrylonitrile-butadiène-styrène (ABS) ou du méthacrylate de méthyle-butadiène-styrène (MBS) en tant que résine de renforcement, plus préférablement le ciment à solvant comprend en outre de l'acrylonitrile-butadiène-styrène (ABS) en tant que résine de renforcement.

8. Ciment à solvant selon la revendication 7, dans lequel la résine de renforcement est du type noyau-enveloppe, de préférence la résine de renforcement comprend un noyau en poly(acrylate de butyle) réticulé avec une enveloppe en poly(méthacrylate de méthyle) greffée.

9. Ciment à solvant selon l'une des revendications 1 à 8, dans lequel le ciment à solvant comprend en outre un épaississant et/ou un renforçateur de viscosité et/ou un stabilisant.

10. Ciment à solvant selon l'une des revendications 1 à 9, dans lequel le ciment à solvant ne comprend pas de cyclohexanone et/ou dans lequel le ciment à solvant ne comprend pas de diméthylsulfoxyde (DMSO) et/ou dans lequel le ciment à solvant ne comprend pas de diméthylformamide (DMF).

11. Ciment à solvant selon l'une des revendications 1 à 10, dans lequel le polymère acrylique au moins partiellement imidisé indiqué au point c) constitue moins de 50% en poids de la quantité totale de résine thermoplastique dissoute des points a) et c) ensemble, de préférence moins de 25% en poids de la résine thermoplastique dissoute totale.

12. Ciment à solvant selon l'une des revendications 1 à 11, dans lequel le ciment à solvant répond aux exigences de la norme européenne EN 14814.

13. Procédé de liaison d'articles réalisés en une résine thermoplastique l'un à l'autre, dans lequel le procédé comprend les étapes consistant à :
i) appliquer un ciment à solvant aux surfaces des articles à lier,
où le ciment à solvant comprend
a) une résine thermoplastique dissoute,
b) un solvant pour la résine thermoplastique indiquée au point a), et
c) un polymère au moins partiellement imidisé (PMMI),
et où le ciment à solvant ne comprend pas de tétrahydrofurane ou de N-Méthyl-2-Pyrrolidone (NMP) et où le ciment à solvant ne comprend pas de composé aliphatique ayant un cycle hydrocarboné avec au moins deux groupes éther dans la structure cyclique,
et où la résine thermoplastique dissoute indiquée au point a) est du PVC ou du CPVC,
et où le polymère acrylique au moins partiellement imidisé indiqué au point c) constitue moins de 75% en poids de la quantité totale de résine thermoplastique dissoute des points a) et c) ensemble
ii) amener les surfaces en contact les unes avec les autres, et
iii) laisser le ciment à solvant former une liaison entre les articles à lier.

14. Utilisation d'un ciment à solvant pour lier des articles réalisés en une résine thermoplastique l'un à l'autre, dans lequel le ciment à solvant comprend
a) une résine thermoplastique dissoute,
b) un solvant pour la résine thermoplastique indiquée au point a), et
c) un polymère au moins partiellement imidisé (PMMI),
et dans lequel le ciment à solvant ne comprend pas de tétrahydrofurane ou de N-Méthyl-2-Pyrrolidone (NMP) et dans lequel le ciment à solvant ne comprend pas de composé aliphatique ayant un cycle hydrocarboné avec au moins deux groupes éther dans la structure cyclique,
et dans lequel la résine thermoplastique dissoute indiquée au point a) est du PVC ou du CPVC,
et dans lequel le polymère acrylique au moins partiellement imidisé indiqué au point c) constitue moins de 75% en poids de la quantité totale de résine thermoplastique dissoute des points a) et c) ensemble.
